# EUROPEAN PATENT APPLICATION

(11) **EP 4 523 837 A1**
(43) Date of publication of application: **19.03.2025**
(21) Application number: 22941800.9
(22) Date of filing: 26.09.2022
(51) Int. Cl.: B23K 26/364, B23K 26/384, B23K 26/062

(54) **METHOD FOR FORMING PRECISE THROUGH-HOLE AT HIGH SPEED BY USING INFRARED LASER**

(30) Priority: 10.05.2022 KR 20220057265
(71) Applicant: Philoptics Co., Ltd., Osan-si, Gyeonggi-do 18102 (KR)
(72) Inventor: RYU, Sang-Gil, Seongnam-si Gyeonggi-do 13475 (KR); SHIM, Sang-Won, Anyang-si Gyeonggi-do 13905 (KR); CHOI, Jin-Ho, Suwon-si Gyeonggi-do 16362 (KR)
(74) Representative: AWA Sweden AB
(86) International application number: PCT/KR2022/014377
(87) International publication number: WO 2023/219213

(57) **Abstract**

Disclosed in the present invention is a method for forming a precise through-hole at high speed by using an infrared laser, wherein the method irradiates in turn single modulated Bessel beam onto a workpiece in a scanning fashion by means of a mirror structure with at least one driving unit coupled to form a laser scanning processing pattern that changes the characteristics of the workpiece by precisely micromachining the workpiece into various shapes or sizes at high speed, and then wet-etching the workpiece, such that the method not only enables laser-machining the workpiece at high speed by significantly reducing laser-machining time compared to conventional methods, but also improves productivity by reducing etching time.

## Description

### [Technical Field]

The present invention relates to a method of forming a precise through-hole at a high speed using an infrared laser, and more specifically, to a method of forming a precise through-hole at a high speed using an infrared laser, which sequentially radiates a single modulated Bessel beam onto a workpiece in a scanning manner using a mirror structure to which at least one driving unit is coupled to form a laser scanning machining pattern that precisely micromachines the workpiece into any shape or size at a high speed to change the characteristics of the workpiece, and then wet-etches the workpiece, thereby not only significantly reducing a laser machining time compared to the conventional methods, but also reducing an etching time to improve productivity.

### [Background Art]

A laser is widely used in machining, such as cutting a workpiece (object to be machined) or forming a through-hole. In such laser machining, optical elements such as a lens are used to mold a laser beam of a desired shape to be suitable for machining operations and radiates the molded laser beam to the workpiece.

In particular, the laser beam can be efficiently used for machining operations such as cutting a brittle material that is not easily machined, such as a transparent glass substrate or forming a through-hole. However, when machining the glass substrate, cracks may be generated in the workpiece by a laser and cracks may propagate.

In addition, when the characteristics are changed therein due to external stains or foreign substances outside the glass substrate, which is a brittle material, there may be a problem that an inner wall of the through-hole may become uneven.

In addition, when forming a fine through-hole in the glass substrate using a laser, there are problems that precise machining is not easy and a lot of operation time are required, thereby lowering productivity.

As a related art, Korean Laid-Open Patent No. 10-2016-0063264 (published on June 03, 2016) is disclosed.

### [Disclosure]

### [Technical Problem]

The present invention is directed to providing a method of forming a precise through-hole at a high speed using an infrared laser, which sequentially radiates a single modulated Bessel beam onto a workpiece in a scanning manner using a mirror structure to which at least one driving unit is coupled to form a laser scanning machining pattern that precisely micromachines the workpiece into any shape or size at a high speed to change the characteristics of the workpiece, and then wet-etches the workpiece, thereby not only significantly reducing a laser machining time compared to the conventional methods, but also reducing an etching time to improve productivity.

### [Technical Solution]

A method of a precise through-hole at a high speed using an infrared laser for achieving the above objects includes an operation (a) of aligning an infrared laser device above a workpiece, an operation (b) of modulating a laser beam emitted from the infrared laser device into a Bessel beam, an operation (c) of performing laser machining that sequentially radiates the modulated Bessel beam to each through-hole forming area of the workpiece in a scanning manner to form a laser scanning machining pattern that locally changes the characteristics of the workpiece, and an operation (d) of etching the workpiece on which the laser scanning machining pattern is formed to form a through-hole in each through-hole forming area.

An ultrashort laser having a wavelength of 900 to 1,200 nm and a pulse width of 50 femtoseconds to 50 picoseconds is used as the laser beam.

The laser scanning machining pattern is formed to have an arrangement structure in which a single dot formed by the laser machining is spaced apart at a regular interval or irregular interval to have a shape corresponding to the through-hole in a plan view.

The laser scanning machining pattern has an arrangement structure having at least one shape selected from a polygon including a triangle, quadrangle, pentagon, hexagon, octagon, and star, a circle, and an ellipse, which are shapes corresponding to the through-hole, by separating the single dot formed by the laser machining at a regular interval or irregular interval of 20 µm or less in a plan view.

The laser scanning machining pattern includes a first laser scanning machining pattern disposed to be spaced apart at regular interval or irregular intervals to have the shape corresponding to the through-hole in a plan view, and at least one second laser scanning machining pattern disposed inside the first laser scanning machining pattern.

The second laser scanning machining pattern has an arrangement structure of a shape that is the same as or differs from that of the first laser scanning machining pattern.

The laser scanning machining pattern is formed to have a straight or curved arrangement structure in which a plurality of dots are connected to have a shape corresponding to the through-hole in a plan view.

The workpiece is preferably a flat glass substrate.

In the operation (c), the laser machining in a scanning manner is performed in a scanning manner using a mirror structure to which at least one driving unit is coupled, and the laser machining in the scanning manner is performed for a stabilization time of 10 ms or less.

In the operation (d), each through-hole positioned in each through-hole forming area is formed coplanarly, or at least some are formed on different planes.

In the operation (d), wet-etching using an etchant including at least one selected from a fluorinated-based etchant and a non-fluorinated-based etchant is used for the etching.

The operation (d) includes an operation (d-1) of forming a plurality of etching grooves by allowing an etchant to penetrate into the laser scanning machining pattern of the workpiece of which characteristics has been locally changed by the laser machining and removing a portion of an exposed surface of the workpiece in a thickness direction, and an operation (d-2) of forming a through-hole by allowing the etchant to penetrate into the laser scanning machining pattern along the plurality of etching grooves toward a central portion of the thickness of the workpiece and naturally separating or corroding a transformed dummy portion of the workpiece positioned in a space between the laser scanning machining patterns.

An inner wall of the through-hole has a taper angle that is an acute angle or obtuse angle with respect to a horizontal surface of the workpiece.

### [Advantageous Effects]

The method of forming a precise through-hole at a high speed using an infrared laser according to the present invention sequentially radiates the single modulated Bessel beam to the workpiece in a scanning manner using the mirror structure to which at least one driving unit is coupled to precisely micromachine the workpiece into any shape or size at a high speed.

In this way, since the method of forming a precise through-hole at a high speed using an infrared laser according to the present invention adopts a scanning method of laser-machining the workpiece while adjusting the reflection angle of the mirror structure to which at least one driving unit is coupled, unlike a general method of forming a through-hole, which moves only a laser stage, it is possible to shorten a stabilization time to about 10 ms or less during laser machining, and thus the above method is not affected by the size of the workpiece to be laser-machined.

Therefore, the method of forming a precise through-hole at a high speed using an infrared laser according to the present invention can perform laser machining at a high speed of 100 times or higher compared to the general method of forming a through-hole, thereby significantly improving productivity.

In addition, since the method of forming a precise through-hole at a high speed using an infrared laser according to the present invention can precisely control a machining position of a workpiece and perform wet-etching in a state of locally changing the inner characteristics of the workpiece to have the size or shape that is the same as or similar to the through-hole, it is possible to significantly reduce an etching time and reduce etchant consumption, thereby improving the uniformity of the quality of the plurality of through-holes formed throughout the workpiece in addition to productivity. Therefore, according to the present invention, the transformed dummy portion of the workpiece positioned between the plurality of etching grooves is removed by being naturally separated or corroded, thereby forming the through-hole having the desired size in a very shorter time than that of the general method of forming a through-hole.

In addition, the method of forming a precise through-hole at a high speed using an infrared laser according to the present invention performs wet-etching in a state of sequentially radiating a single Bessel beam onto each through-hole forming area of the workpiece in a scanning manner to form the laser scanning machining pattern. Therefore, according to the present invention, even when the characteristics of the workpiece are partially unevenly changed due to some defective laser scanning machining patterns among the laser scanning machining patterns positioned in through-hole forming areas by stains, foreign substances, or the like outside the workpiece, other laser scanning machining patterns are disposed around, making it possible to secure the product quality of the through-hole without significant impact during wet-etching.

As a result, according to the method of forming a precise through-hole at a high speed using an infrared laser according to the present invention, it is possible to secure the even size between the diameter of the surface portion of the through-hole and the diameter of the central portion of the through-hole during wet-etching.

In addition, the method of forming a precise through-hole at a high speed using an infrared laser according to the present invention can diversify the through-hole in any shape to have the shape that is substantially the same as or similar to the laser scanning machining pattern by performing wet-etching using the laser scanning machining pattern having the arrangement structure spaced apart at regular intervals or irregular intervals.

### [Description of Drawings]

FIGS. 1 to 4 are process cross-sectional views showing a general method of forming a through-hole using an infrared laser.
FIG. 5 is a schematic view for describing a general laser Bessel beam optical modulation device.
FIG. 6 is a plan view showing a laser machining dot formed using the laser Bessel beam optical modulation device of FIG. 5.
FIG. 7 is a process flowchart showing a method of forming a precise through-hole at a high speed using an infrared laser according to an embodiment of the present invention.
FIG. 8 is a schematic view showing an infrared laser device according to the embodiment of the present invention.
FIG. 9 is a plan view showing a laser scanning machining pattern formed using the infrared laser device of FIG. 8.
FIGS. 10 to 12 are process cross-sectional views showing the method of forming a through-hole at a high speed using an infrared laser according to the embodiment of the present invention.
FIG. 13 is a plan view showing various application examples to a laser scanning machining pattern according to the embodiment of the present invention.
FIG. 14 is a plan view showing various application examples to a laser scanning machining pattern according to one modified example of the present invention.
FIG. 15 is a plan view showing various application examples to a laser scanning machining pattern according to another modified example of the present invention.
FIG. 16 is a process image showing a process of forming a through-hole manufactured according to Comparative Example 1.
FIG. 17 is a process image showing a process of forming a through-hole manufactured according to Example 1.

### [Mode for Invention]

Advantages and features of the present invention and methods for achieving them will become clear with reference to embodiments described below in detail together with the accompanying drawings. However, the present invention is not limited to the embodiments disclosed below but may be implemented in various different forms, the embodiments are merely provided to make the disclosure of the present invention complete and fully inform those skilled in the art to which the present invention pertains of the scope of the present invention, and the present invention is only defined by the scope of the appended claims. The same reference numbers indicate the same components throughout the specification.

A method of forming a precise through-hole at a high speed using an infrared laser according to exemplary embodiments of the present invention will be described with reference to the accompanying drawings as follows.

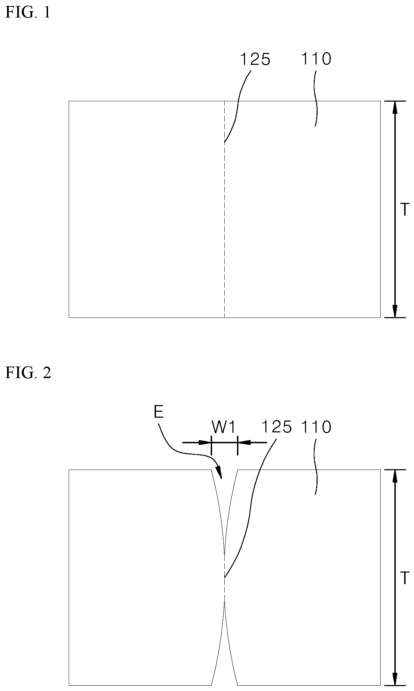

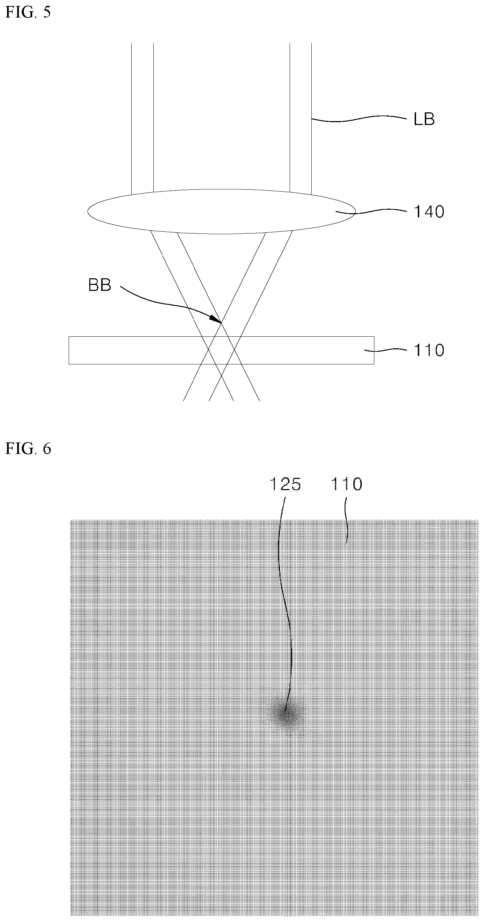

FIGS. 1 to 4 are process cross-sectional views showing a general method of forming a through-hole using an ultrashort infrared laser. In addition, FIG. 5 is a schematic view for describing a general laser Bessel beam optical modulation device, and FIG. 6 is a plan view showing a laser machining dot formed using the laser Bessel beam optical modulation device of FIG. 5.

As shown in FIGS. 1, 5, and 6, after aligning a general laser Bessel beam optical modulation device on a workpiece 110, a Bessel beam BB emitted from the laser Bessel beam optical modulation device is radiated onto the workpiece 110 to form a laser machining dot 125.

Here, a laser beam LB emitted from the general laser Bessel beam optical modulation device is modulated into the Bessel beam BB while passing through an objective lens-based optical element 140, and the modulated Bessel beam BB is radiated onto the workpiece 110 to form the laser machining dot 125. The optical element 140 may be a non-diffractive element for modulating the laser beam LB into the Bessel beam BB, but is not limited thereto. Therefore, the laser beam LB may be modulated into an annular Bessel beam BB when viewed in the beam traveling direction while passing through the objective lens-based optical element 140.

Next, as shown in FIGS. 2 to 4, a through-hole TH is formed by etching the workpiece 110 on which the laser machining dot 125 is formed.

In the present operation, wet-etching using a fluorinated-based etchant, a non-fluorinated-based etchant, or the like may be used for etching, but it is exemplary, and any etchant capable of etching a glass substrate may be used without limitation.

In this case, FIG. 2 shows an initial etching process, and it can be seen that an etching groove E having a first width W1 is formed as an etchant penetrates into a part of which characteristics have been changed by the laser machining dot 125.

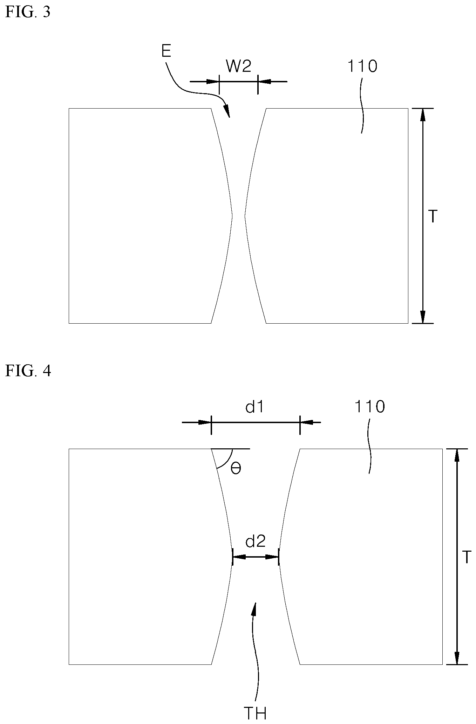

FIG. 3 shows a middle etching process, and it can be seen that the size is expanded to an etching groove E having a second width W2 larger than the first width W1 as the etchant further penetrates along the etching groove E over time.

In addition, FIG. 4 shows an end etching process, and a diameter of the etching groove is expanded as the workpiece 110 is gradually removed along the etching groove E (see FIG. 3) due to a reaction with the etchant over time, and finally, the top and bottom of the etching groove are connected to form the through-hole H.

To form a micrometer-sized fine through-hole TH in the workpiece 110, which is a transparent and brittle material, the above-described general method of forming a through-hole generally radiates a modulated Bessel beam BB onto the workpiece 110 using an infrared laser to form the laser machining dot 125 in each through-hole forming area and changes the characteristics of the workpiece 110 and then adjusts a wet-etching time to form a final desired size.

However, the general method of forming a through-hole is a step and repeat machining method of radiating a Bessel beam BB onto each through-hole forming area while moving a stage in which the workpiece 110 is seated, and when the stage moves to the through-hole forming area, it usually takes a considerable amount of time including acceleration, deceleration, and stabilization time in the range of 100 ms to 1,000 ms. Therefore, as the size of the workpiece 110 for laser machining increases, the size of the stage inevitably increases, so the acceleration, deceleration, and stabilization time increase further. This eventually greatly increases the total laser machining time when the size of the workpiece 110 increases, thereby lowering productivity. In addition, as the number of through-holes THs increases, the acceleration, deceleration, and stabilization time also increase, thereby greatly increasing a machining time and lowering productivity.

In addition, since the general method of forming a through-hole radiates the Bessel BB onto the through-hole forming area of the workpiece 110, the Bessel beam BB radiated in a thickness direction of the workpiece 110 intensively laser-machines only one machining position, and thus when there are surface defects such as foreign substances or stains in the workpiece 110 at a machining position, there is a high risk that the characteristics inside the workpiece 110 that is a brittle material, may not be evenly changed. This eventually causes a defective through-hole TH during wet-etching, thereby hindering the uniformity of the sizes or shapes of a plurality of through-holes THs positioned in each through-hole forming area and causes an uneven size between a diameter d1 of a surface portion of the through-hole TH and a diameter d2 of a central portion of the through-hole TH to act as a factor to reduce a taper angle θ, thereby deteriorating product quality.

Therefore, in the general method of forming a through-hole, the quality of a plurality of final through-holes THs formed in each through-hole forming area of the workpiece 110 is greatly affected by the performance of the etching process, so there is a limitation to securing the even quality of the through-holes THs, and mass productivity is limited because it takes several hours or longer of an etching time depending on the final size of the through-hole TH.

In addition, since the general method of forming a through-hole is sensitive to the surface state of the workpiece 110, such as the removal of foreign substances and stains, there is a limitation to securing the uniformity of the quality of the through-holes THs distributed throughout the workpiece 110.

In addition, the general method of forming a through-hole has a limitation in diversifying the shape of the through-hole TH because the through-hole TH is formed by radiating the Bessel beam BB onto each through-hole forming area of the workpiece 110 to form the single laser machining dot 125 and performing wet-etching using an etchant on the single laser machining dot 125 to gradually expand the size of the hole.

To resolve these limitations, the method of forming a precise through-hole at a high speed using an infrared laser according to the present invention sequentially radiates the single modulated Bessel beam to the workpiece in a scanning manner using the mirror structure to which at least one driving unit is coupled to precisely micromachine the workpiece into any shape or size at a high speed.

In this way, since the method of forming a precise through-hole at a high speed using an infrared laser according to the present invention adopts a scanning method of laser-machining the workpiece while moving a mirror structure to which at least one driving unit is coupled, unlike the general method of forming a through-hole, which moves only a stage, it is possible to shorten a stabilization time to about 10 ms or less, more preferably, 1 ms or less during laser machining, thereby being not affected by the size of the workpiece to be laser-machined.

Therefore, the method of forming a precise through-hole at a high speed using an infrared laser according to the embodiment of the present invention can perform laser machining at a high speed of 100 times or higher compared to the general method of forming a through-hole, thereby significantly improving productivity.

In addition, since the method of forming a precise through-hole at a high speed using an infrared laser according to the present invention can precisely control a machining position of the workpiece at a high speed and perform wet-etching in a state of locally changing the inner characteristics of the workpiece to have the size or shape that is the same as or similar to the through-hole, it is possible to significantly reduce an etching time and reduce etchant consumed cost, thereby improving the uniformity of the quality of the plurality of through-holes formed throughout the workpiece in addition to productivity.

Hereinafter, a method of forming a precise through-hole at a high speed using an infrared laser according to embodiments of the present invention will be described in detail with reference to the accompanying drawings.

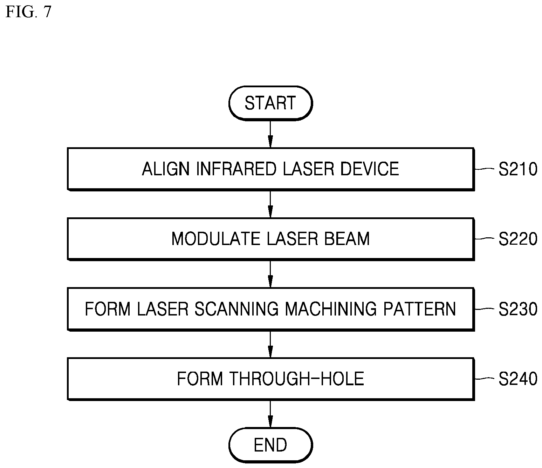

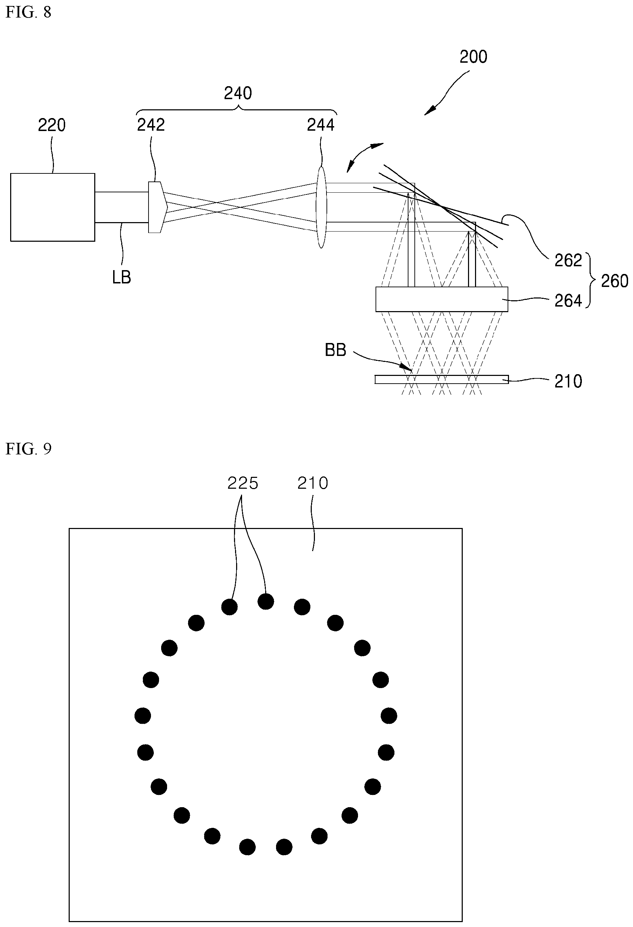

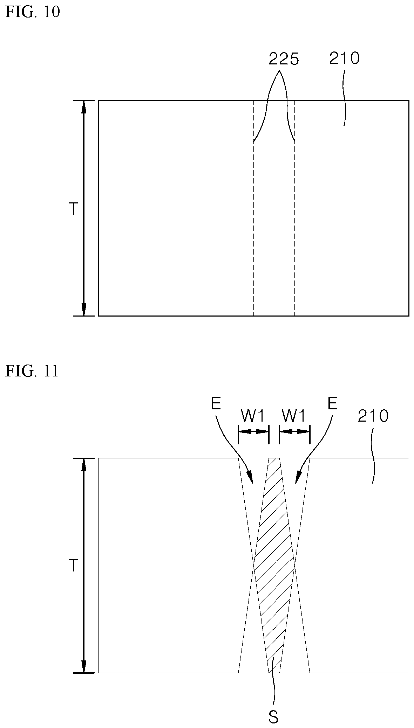

FIG. 7 is a process flowchart showing a method of forming a precise through-hole at a high speed using an infrared laser according to an embodiment of the present invention, FIG. 8 is a schematic view showing an infrared laser device according to the embodiment of the present invention, and FIG. 9 is a plan view showing a laser scanning machining pattern formed using the infrared laser device of FIG. 8. In addition, FIGS. 10 to 12 are process cross-sectional views showing the method of forming a through-hole at a high speed using an infrared laser according to the embodiment of the present invention.

As shown in FIG. 7, the method of forming a through-hole at a high speed using an infrared laser according to the embodiment of the present invention includes an infrared laser device aligning operation (S210), a laser beam modulating operation (S220), a laser scanning machining pattern forming operation (S230), and a through-hole forming operation through wet-etching (S240).

### Aligning infrared laser device

As shown in FIGS. 7 and 8, the infrared laser device aligning operation (S210) includes aligning an infrared laser device 200 above a workpiece 210.

Here, the workpiece 210 may have the shape of a flat plate, but is not limited thereto. In addition, the workpiece 210 may be a glass substrate that is a brittle material that is transparent and is not easily machined. However, the workpiece 210 is not limited to a transparent glass substrate and may include any material such as an opaque substrate, a metallic material, or a semiconductor wafer.

### Modulating laser beam

As shown in FIGS. 7 and 8, the laser beam modulating operation (S220) includes modulating the laser beam LB emitted from the infrared laser device 200 into the Bessel beam BB.

Here, the infrared laser device 200 may include a laser unit 220, a first optical unit 240, and a second optical unit 260.

The laser unit 220 emits the laser beam LB for machining the workpiece 210. The laser unit 220 may generate laser light having pulses and emit the laser light in the form of a beam. In this case, the emitted laser beam LB may have an ultrashort pulse or a burst pulse, which has a pulse having a wavelength, energy, and duration suitable for machining the workpiece 210. More specifically, as the laser beam LB, an ultrashort laser having a wavelength of 900 to 1,200 nm and a pulse width of 50 femtoseconds to 50 picoseconds may be used. In addition, the laser beam LB may have a circular shape or a Gaussian beam shape when viewed in the traveling direction.

The first optical unit 240 is disposed on the traveling path of the laser beam LB to modulate the incident laser beam LB into the Bessel beam BB. To this end, the first optical unit 240 may include a first optical element 242 for modulating the laser beam LB into the Bessel beam BB and a second optical element 244 disposed behind the first optical element 242.

The first optical element 242 may be a non-diffractive element for modulating the laser beam LB into the Bessel beam BB, but is not limited thereto. The first optical element 242 may be a diffraction element for modulating the laser beam LB into a beam capable of making filamentation through nonlinear absorption.

For example, the first optical element 242 may be a conical prism or an axicon lens for modulating the laser beam LB into the Bessel beam BB. Therefore, the laser beam LB may be modulated into an annular Bessel beam BB when viewed in the beam traveling direction while passing through the first optical element 242.

The first optical element 242 is not limited to a conical prism or an axicon lens, and any optical element capable of modulating the laser beam LB into the Bessel beam BB may be used. For example, any optical element such as a diffractive element, such as a diffractive optical element, or a spatial light modulator may be used as the first optical element 242.

In addition, after the laser beam LB is modulated into the Bessel beam BB through the first optical element 242, the second optical element 244 that may limit the expansion of a Bessel beam radiation area to be suitable for machining the workpiece 210 may be mounted behind the first optical element 242.

That is, the second optical element 244 may be an optical element for parallelizing an optical axis of the Bessel beam BB modulated from the first optical element 242. For example, the second optical element 244 may be a collimating lens or a collimating lens. After the optical axes of the Bessel beam BB passing through the second optical element 244 are arranged in parallel, the Bessel beam BB may be incident on the second optical unit 260.

Optical properties, arrangement intervals, and the like of the first optical element 242 and the second optical element 244 are appropriately selected or adjusted so that the Bessel beam BB is incident on the second optical unit 260 through the second optical element 244.

Here, the second optical unit 260 may be used to reflect the Bessel beam BB modulated by the first optical unit 240 onto the workpiece 210 and may include a mirror structure 262 and a focusing lens 264.

At least one driving unit is coupled to the mirror structure 262. Therefore, since a reflection angle of the mirror structure 262 may be adjusted in real time by at least one driving unit, the Bessel beam BB may be reflected toward the workpiece 210 at a high speed. The mirror structure 262 may be a fine steering mirror (FSM) to which one driving unit is coupled or a scanner to which two or more driving units are coupled.

The mirror structure 262 may move the path of the Bessel beam BB modulated by the first optical unit 240. That is, the mirror structure 262 may continuously change the direction of the optical axis of the Bessel beam BB modulated by the first optical unit 240 within a predetermined angle range, thereby sequentially radiating the Bessel beam BB modulated by the first optical unit 240 to each through-hole forming area on the workpiece 210 in a scanning manner.

The mirror structure 262 may include at least one mirror with an adjustable angle. Therefore, the Bessel beam BB incident on the mirror structure 262 is reflected from the mirror, and the reflection angle of the reflected Bessel beam BB may be adjusted. For example, the mirror structure 262 may include a plurality of mirrors that may each rotate along rotational axes arranged in at least two axial directions and may be formed as a galvanometer mirror. The mirror structure 262 is not limited to the galvanometer mirror.

The Bessel beam BB with a path changed through the mirror structure 262 may be condensed on the workpiece 210 by the focusing lens 264.

The focusing lens 264 may be disposed behind the scanner 262 and above the workpiece 210. Therefore, the Bessel beam BB emitted from the mirror structure 262 may be radiated to each through-hole forming area of the workpiece 210 in a scanning manner by the focusing lens 264.

### Forming laser scanning machining pattern

As shown in FIGS. 7 to 10, the laser scanning machining pattern forming operation (S230) includes performing laser machining that sequentially radiates the modulated Bessel beam BB to each through-hole forming area of the workpiece 210 in a scanning manner to form a laser scanning machining pattern 225 that locally changes the characteristics of the workpiece 210.

The laser scanning machining pattern 225 is arranged in each through-hole forming area.

In this case, in the present invention, laser machining is performed by sequentially radiating the single modulated Bessel beam BB to the workpiece 210 in a scanning manner using the mirror structure 262 to which at least one driving unit is coupled.

Therefore, in the present invention, since the single modulated Bessel beam BB is radiated while adjusting the reflection angle of the mirror structure 262 to which at least one driving unit is coupled, the laser scanning machining pattern 225 may be precisely formed at a high speed.

In this way, in the present invention, a scanning manner in which laser machining is performed while adjusting the reflection angle of the mirror structure 262 to which at least one driving unit is coupled is applied. This means that when moving to the position of the through-hole TH forming area, the acceleration, deceleration, and stabilization time are shorter than 10 ms, which is much shorter than the time for which only the stage is moved to the position of the through-hole forming area. Therefore, the method is not affected by the size of the workpiece 210 to be laser-machined.

Therefore, the method of forming a precise through-hole at a high speed using an infrared laser according to the embodiment of the present invention can perform laser machining at a high speed of 100 times or higher compared to the general method of forming a through-hole, thereby significantly improving productivity.

Here, the laser scanning machining pattern 225 is preferably formed to have the arrangement structure in which a single dot formed by laser machining is spaced apart at a regular interval of 20 µm or less to have a shape corresponding to the through-hole, but is not limited thereto. That is, the laser scanning machining pattern 225 may be formed to have the arrangement structure in which the single dot formed by laser machining is spaced apart at an irregular interval of 20 µm or less to have a shape corresponding to the through-hole in a plan view.

Here, as shown in FIG. 9, the laser scanning machining pattern 225 may be formed so that the modulated Bessel beam is radiated to each the through-hole forming area of the workpiece 210 in a scanning manner using the mirror structure to which at least one driving unit is coupled so that the plurality of laser machining dots spaced apart at regular intervals have the circular arrangement structure in a plan view.

In this way, when the laser scanning machining pattern 225 is formed to be spaced apart at regular or irregular intervals to have the circular arrangement structure, an area in which the characteristics of the workpiece 210 are changed by the Bessel beam BB radiated to the workpiece 210 for each through-hole forming area can be increased.

Therefore, the area in which the characteristics of the workpiece 210 are changed increases in proportion to the number of dots of the laser scanning machining pattern 225, which eventually increases the number of dots of the laser scanning machining pattern 225 that generate fine holes in the workpiece 210 by laser machining during wet-etching to increase an area into which an etchant may easily penetrate, thereby significantly reducing an etching time.

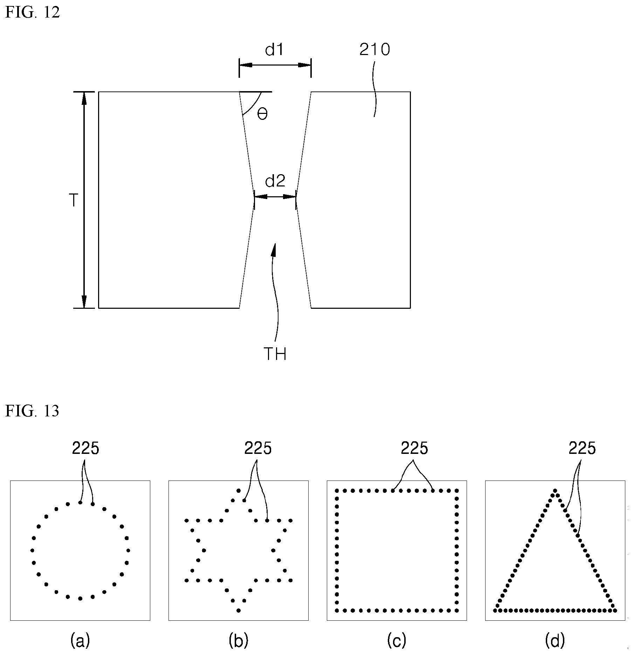

Meanwhile, FIG. 13 is a plan view showing various application examples to a laser scanning machining pattern according to the embodiment of the present invention.

As shown in FIG. 13, the laser scanning machining pattern 225 has a shape that is the same as or similar to a shape of a through-hole finally formed after wet-etching by radiating the modulated Bessel beam onto the workpiece in a scanning manner and arranging the laser scanning machining pattern to be spaced apart at regular or irregular intervals.

Therefore, since the shape of the through-hole is determined depending on the arrangement shape of the laser scanning machining pattern 225, when the arrangement shape of the laser scanning machining pattern 225 is changed in various ways, the through-hole may be formed to have a shape corresponding to the changed arrangement shape in various ways.

That is, as shown in FIG. 13A, the laser scanning machining pattern 225 may have the plurality of laser machining dots having the circular arrangement structure in a plan view.

In addition, as shown in FIGS. 13B, 13C, and 13D, the laser scanning machining pattern 225 may have the plurality of laser machining dots having each of a star-shaped, quadrangular, and triangular arrangement structure in a plan view.

However, the laser scanning machining pattern 225 is not limited to the arrangement structures with the above-described shapes. That is, the laser scanning machining pattern 225 may adopt the plurality of laser machining dots having any arrangement structure such as a polygonal arrangement structure including a pentagon, hexagon, octagon, and the like, and an elliptical arrangement structure.

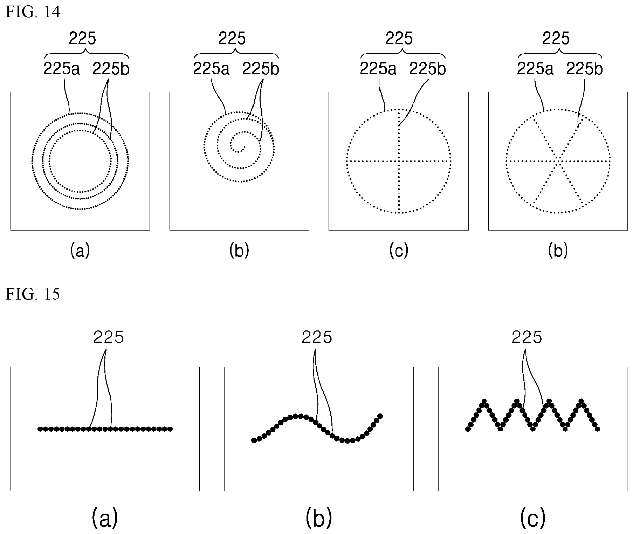

FIG. 14 is a plan view showing various application examples to a laser scanning machining pattern according to one modified example of the present invention.

As shown in FIGS. 14A to 14D, the laser scanning machining pattern 225 may have a first laser scanning machining pattern 225a disposed to be spaced apart at regular or irregular intervals to have the shape corresponding to the through-hole, and at least one second laser scanning machining pattern 225b disposed inside the first laser scanning machining pattern 225a in a plan view.

In this case, FIG. 14A shows an example in which the first laser scanning machining pattern 225a and two second laser scanning machining patterns 225b having an annual ring shape inside the first laser scanning machining pattern 225a are arranged.

In this way, the second laser scanning machining pattern 225b may have the arrangement structure having the same shape as the first laser scanning machining pattern 225a.

In addition, FIG. 14B shows an example in which the first laser scanning machining pattern 225a and one second laser scanning machining pattern 225b having an annual ring structure inside the first laser scanning machining pattern 225a are arranged.

In addition, FIG. 14C shows an example in which the first laser scanning machining pattern 225a and one second laser scanning machining pattern 225b having a cross structure inside the first laser scanning machining pattern 225a are arranged.

In addition, FIG. 14D shows an example in which the first laser scanning machining pattern 225a and one second laser scanning machining pattern 225b radially intersecting inside the first laser scanning machining pattern 225a.

As shown in FIGS. 14B to 14D, the second laser scanning machining pattern 225b may have the arrangement structure having a different shape from the first laser scanning machining pattern 225a.

As described with reference to FIGS. 14A to 14D, when the laser scanning machining pattern 225 is designed to have the first laser scanning machining pattern 225a and at least one second laser scanning machining pattern 225b, the number of dots of the laser scanning machining pattern 225 can be increased, thereby further increasing the number of areas in which the characteristics of the workpiece 210 are changed and increasing a passage through which the etchant can more easily penetrate to further reduce an etching time. As a result, it is possible to significantly reduce an etching time and significantly reduce etchant consumption, thereby maximizing productivity.

In addition, FIG. 15 is a plan view showing various application examples to a laser scanning machining pattern according to another modified example of the present invention.

As shown in FIGS. 15A to 15C, the laser scanning machining pattern 225 may be formed to have a straight or curved arrangement structure in which a plurality of dots are connected to have a shape corresponding to a through-hole in a plan view.

In this case, as shown in FIG. 15A, the laser scanning machining pattern 225 may have a straight line shape in which a plurality of dots are connected to have a shape corresponding to a through-hole in a plan view. Here, "straight line" is not limited to the arrangement in an x-axis direction or y-axis direction and may be applied without limitation as long as it is arranged in a straight line in any specific direction as well as obliquely.

In addition, as shown in FIG. 15B, the laser scanning machining pattern 225 may have a curved shape in which a plurality of dots are connected to have a shape corresponding to a through-hole in a plan view. Here, "curve" means the arrangement in a shape that is curved at least once and may be applied as long as only at least a portion is curved.

In addition, as shown in FIG. 15C, the laser scanning machining pattern 225 has a straight line shape in which a plurality of dots are connected to have a shape corresponding to a through-hole in a plan view, but may have any structure such as a structure in which at least two or more straight lines are connected or intersected.

As described with reference to FIGS. 15A to 15C, when the laser scanning machining pattern 225 is formed to have the straight or curved arrangement structure in which a plurality of dots are connected to have a shape corresponding to a through-hole, the number of dots of the laser scanning machining pattern 225 can be increased, thereby further increasing the number of areas in which the characteristics of the workpiece 210 are changed and increasing a passage through which the etchant can more easily penetrate to further reduce an etching time. As a result, it is possible to significantly reduce an etching time and significantly reduce etchant consumption, thereby maximizing productivity.

### Forming through-hole through wet-etching

As shown in FIGS. 7, 11, and 12, the through-hole forming operation through wet-etching (S240) includes forming the through-hole TH in each through-hole forming area by etching the workpiece 210 on which the laser scanning machining pattern 225 (see FIG. 10) is formed.

More specifically, the through-hole forming operation through wet-etching (S240) may be subdivided into a plurality of etching grooves forming process and a through-hole forming process.

The plurality of etching grooves forming process includes forming a plurality of etching grooves E by allowing an etchant to penetrate into the laser scanning machining pattern 225 of the workpiece 210 of which characteristics have been locally changed by laser machining so that a portion of an exposed surface of the workpiece 210 is removed in the thickness direction.

In the present operation, wet-etching using a fluorinated-based etchant, a non-fluorinated-based etchant, or the like may be used for etching, but it is exemplary, and any etchant capable of etching the workpiece 210 may be used without limitation.

More preferably, wet-etching using an etchant including one or more of hydrofluoric acid (HF), ammonium fluoride (NH₄F), potassium hydroxide (KOH), and sodium hydroxide (NaOH) is used.

Next, the through-hole forming process includes forming a through-hole TH by allowing the etchant to penetrate along the plurality of etching grooves E toward the center of the thickness of the workpiece 210 and naturally separating or corroding a transformed dummy portion S of the workpiece 210 positioned in a space between the laser scanning machining patterns 225. For example, when the size of the shape transformed by laser machining is large, the dummy portion S is removed by being naturally separated in the etching process, and when the size of the shape transformed by laser machining is small, the dummy portion S may be naturally corroded.

In this way, in the present invention, as the plurality of etching grooves E are further etched by an etchant over time, the transformed dummy portion S of the workpiece 210 positioned between the plurality of etching grooves E is removed by being naturally separated or corroded, thereby forming the through-hole TH of the desired size in a sufficiently short time compared to the general method of forming a through-hole.

Each of the through-holes TH positioned in each through-hole forming area may be formed coplanarly. In addition, each of the through-holes TH positioned in each through-hole forming area may be formed on a different plane. In addition, some of the through-holes TH positioned in each through-hole forming area may be formed coplanarly, and the others may be formed on different planes.

The through-hole TH of the present invention may have a diameter of 1 µm to 50 cm, but is not limited thereto. In the present invention, a diameter does not mean only the maximum length of a circular through-hole TH, but may be widely construed as meaning the maximum length of a polygonal or elliptical through-hole TH.

Here, the surface portion of the through-hole TH may have a first diameter d1 and an inner central portion may have a second diameter d2 smaller than the first diameter d1. As a result, an inner wall of the through-hole TH may have a taper angle θ that is an acute angle with respect to a horizontal surface of the workpiece 210.

Here, the surface portion of the through-hole TH may have the first diameter d1 and the inner central portion may have the second diameter d2 larger than the first diameter d1. As a result, the inner wall of the through-hole TH may have a taper angle θ that is an obtuse angle with respect to the horizontal surface of the workpiece 210. Therefore, the inner wall of the through-hole TH may have a taper angle θ that is an acute angle and obtuse angle with respect to the horizontal surface of the workpiece 210.

That is, in the general method of forming a through-hole, since the Bessel beam is radiated to each through-hole forming area of the workpiece so that the Bessel beam radiated in the thickness direction of the workpiece intensively laser-machines only one machining position, when there are surface defects such as foreign substances, stains, or the like on the workpiece at the machining position, there is a high risk in which the characteristics inside the workpiece that is a brittle material may not be evenly changed. This eventually causes a defective through-hole during wet-etching, thereby hindering the uniformity of the sizes or shapes of a plurality of through-holes positioned in each through-hole forming area and causes an uneven size between the diameter of the surface portion of the through-hole and the diameter of the central portion of the through-hole to act as a factor to reduce the taper angle, thereby deteriorating product quality.

In contrast, since the method of forming a through-hole according to the embodiment of the present invention performs wet-etching in a state of sequentially radiating the Bessel beam BB to each through-hole forming area of the workpiece 210 in a scanning manner to form the laser scanning machining pattern 225 in a shape that is the same as or similar to the shape of the through-hole TH, the plurality of etching grooves E may be formed in the workpiece 210 only with etching for a minimum time.

In this case, as the plurality of formed etching grooves E are further etched by an etchant over time, the transformed dummy portion S of the workpiece 210 positioned between the plurality of etching grooves E is removed by being naturally separated or corroded, thereby forming the through-hole TH of the desired size in a very short time compared to the general method of forming a through-hole.

In addition, since the method of forming a precise through-hole at a high speed using an infrared laser according to the embodiment of the present invention performs wet-etching in the state of sequentially radiating one Bessel beam BB to each through-hole forming area of the workpiece 210 in a scanning manner to form the laser scanning machining pattern 225, even when the characteristics of the workpiece 210 are partially unevenly changed due to some defective laser machining dots among the laser scanning machining patterns 225 positioned in each through-hole forming area due to stains, foreign substances, or the like outside the workpiece 210, other laser machining dots are disposed therearound, so it is possible to secure the product quality of the through-hole TH without significant impact during wet-etching.

As a result, the method of forming a precise through-hole at a high speed using an infrared laser according to the embodiment of the present invention can uniformly secure the size between the diameter d1 of the surface portion of the through-hole TH and the diameter d2 of the central portion of the through-hole TH during wet-etching.

In addition, the general method of forming a through-hole is limited in diversifying the shape of the through-hole because it forms a through-hole by radiating one Bessel beam to each through-hole forming area of the workpiece to form one laser machining dot and performing wet-etching using an etchant on the laser machining dot to gradually expand the size of the hole

On the other hand, the method of forming a precise through-hole at a high speed using an infrared laser according to the present invention can diversify the through-hole in any shape to have the shape that is substantially the same as or similar to the laser scanning machining pattern 225 by performing wet-etching using the laser scanning machining pattern 225 having the array structure spaced at regular intervals or irregular intervals.

Therefore, the method of forming a precise through-hole at a high speed using an infrared laser according to the present invention may be used in a semiconductor, a display, and a solar cell, but is not limited, and it would be obvious that the above method may be applied to any field that includes a technology of forming a through-hole in a brittle material without limitation.

By the operations S210 to S240, the method of forming a precise through-hole at a high speed using an infrared laser according to the present invention may be ended.

As described above, the method of forming a precise through-hole at a high speed using an infrared laser according to the present invention sequentially radiates the single modulated Bessel beam to the workpiece in a scanning manner using the mirror structure to which at least one driving unit is coupled to precisely micromachine the workpiece into any shape or size at a high speed.

In this way, since the method of forming a precise through-hole at a high speed using an infrared laser according to the embodiment of the present invention adopts a scanning method of laser-machining the workpiece while adjusting the reflection angle of the mirror structure to which at least one driving unit is coupled, unlike a general method of forming a through-hole, which moves only a laser stage, it is possible to shorten a stabilization time to about 10 ms or less during laser machining, and thus the above method is not affected by the size of the workpiece to be laser-machined.

Therefore, the method of forming a precise through-hole at a high speed using an infrared laser according to the embodiment of the present invention can perform laser machining at a high speed of 100 times or higher compared to the general method of forming a through-hole, thereby significantly improving productivity.

In addition, since the method of forming a precise through-hole at a high speed using an infrared laser according to the present invention can precisely control a machining position of the workpiece and perform wet-etching in a state of locally changing the inner characteristics of the workpiece to have the size or shape that is the same as or similar to the through-hole, it is possible to significantly reduce an etching time and reduce etchant consumption, thereby improving the uniformity of the quality of the plurality of through-holes formed throughout the workpiece in addition to productivity. Therefore, according to the embodiment of the present invention, the transformed dummy portion of the workpiece positioned between the plurality of etching grooves is removed by being naturally separated or corroded, thereby forming the through-hole having the desired size in a very shorter time than that of the general method of forming a through-hole.

In addition, the method of forming a precise through-hole at a high speed using an infrared laser according to the embodiment of the present invention performs wet-etching in a state of sequentially radiating a single Bessel beam onto each through-hole forming area of the workpiece in a scanning manner to form the laser scanning machining pattern. Therefore, according to the present invention, even when the characteristics of the workpiece are partially unevenly changed due to some defective laser scanning machining patterns among the laser scanning machining patterns positioned in through-hole forming areas by stains, foreign substances, or the like outside the workpiece, other laser scanning machining patterns are disposed around, making it possible to secure the product quality of the through-hole without significant impact during wet-etching.

As a result, according to the method of forming a precise through-hole at a high speed using an infrared laser according to the embodiment of the present invention, it is possible to secure the even size between the diameter of the surface portion of the through-hole and the diameter of the central portion of the through-hole during wet etching.

In addition, according to the method of forming a precise through-hole at a high speed using an infrared laser according to the embodiment of the present invention, the through-hole can diversify to have the shape that is substantially the same as or similar to the laser scanning machining pattern also has any shape by performing wet-etching using the laser scanning machining pattern having the array structure spaced at regular intervals or irregular intervals.

### Example

Hereinafter, the configuration and operation of the present invention will be described in more detail through exemplary embodiments of the present invention. However, this is suggested as preferred examples of the present invention and may not be construed as limiting the present invention thereby in any sense.

Since contents not described herein may be technically inferred by those skilled in the art, a description thereof will be omitted.

### 1. Manufacturing of through-hole sample

### Example 1

After aligning an infrared laser device on a glass substrate with a thickness of 0.55 mm, a laser beam emitted from the infrared laser device was modulated into a Bessel beam. Next, the modulated Bessel beam was sequentially radiated to each through-hole forming area of the glass substrate in a scanning manner to form a laser scanning machining pattern that changes the characteristics of a workpiece. In this case, the laser scanning machining pattern was controlled so that a plurality of laser machining dots had a circular shape that was regularly spaced apart at regular intervals.

Next, a through-hole was formed by wet-etching the glass substrate on which the laser scanning machining pattern was formed for 13 minutes at a rate of 2 µm/min using a hydrofluoric acid-based etchant.

### Example 2

Except for wet-etching the glass substrate for 18 minutes at a rate of 1.5 µm/min, a through-hole was formed in the same method as Example 1.

### Example 3

Except for wet-etching the glass substrate for 9 minutes at a rate of 2.5 µm/min, a through-hole was formed in the same method as Example 1.

### Comparative Example 1

After aligning a laser Bessel beam optical modulation device on a glass substrate with a thickness of 0.65 mm, a laser beam emitted from the laser Bessel beam optical modulation device was modulated into a Bessel beam. Next, the modulated Bessel beam was sequentially radiated to each through-hole forming area of the glass substrate to form a laser machining dot that changes the characteristics of a workpiece.

Next, a through-hole was formed by wet-etching the glass substrate on which the laser machining dot was formed for 80 minutes at a rate of 2 µm/min using a hydrofluoric acid-based etchant.

### Comparative Example 2

Except for wet-etching the glass substrate for 68 minutes at a rate of 2.5 µm/min, a through-hole was formed in the same method as Example 1.

### 2. Physical properties evaluation

Table 1 shows the result of evaluating physical properties for a through-hole sample manufactured according to Examples 1 to 3 and Comparative Examples 1 and 2.

**[Table 1]**

| Remarks | Etching time (min) | Diameter (d1, µm) of surface portion of through-hole | Diameter (d2, µm) of central portion of through-hole |
|---|---|---|---|
| Comparative Example 1 | 80 | 170 | 100 |
| Comparative Example 2 | 68 | 168 | 102 |
| Example 1 | 13 | 150 | 105 |
| Example 2 | 18 | 153 | 104 |
| Example 3 | 9 | 152 | 103 |

As shown in Table 1, it can be confirmed that the through-hole samples manufactured according to Examples 1 to 3 were formed for only an etching time within 20 minutes based on a glass substrate with a thickness of 0.55 mm before etching.

On the other hand, it can be confirmed that the through-hole sample manufactured according to Comparative Examples 1 and 2 requires an etching time of 1 hour or more to form the through-hole based on a glass substrate having a thickness of 0.65 mm before etching.

### 2. Microstructure observation

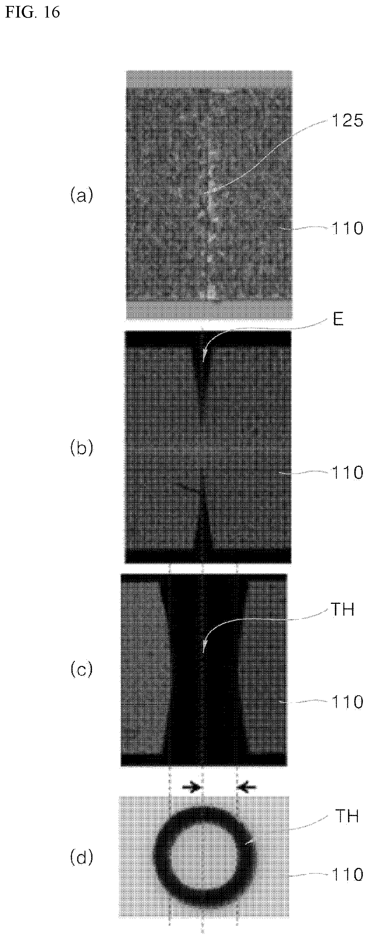

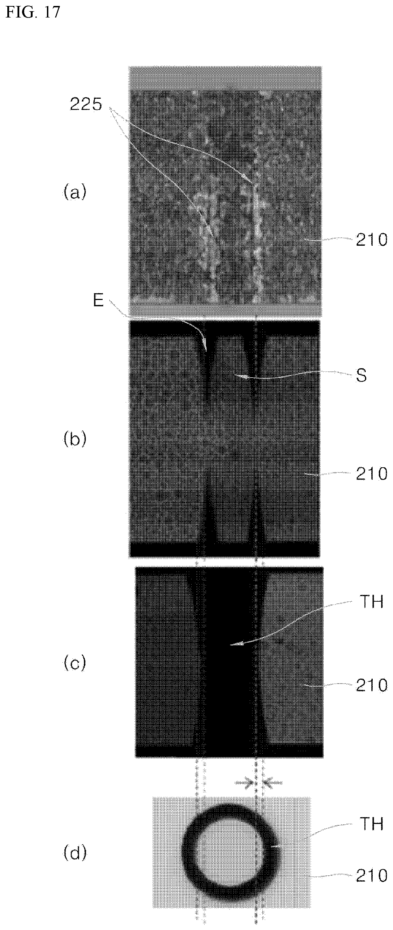

FIG. 16 is a process image showing a process of forming a through-hole manufactured according to Comparative Example 1, and FIG. 17 is a process image showing a process of forming a through-hole manufactured according to Example 1.

As shown in FIG. 16A, in Comparative Example 1, it can be confirmed that the modulated Bessel beam was radiated to the glass substrate 110 to form the laser machining dot 125 that changes the characteristics of the glass substrate 110 in the thickness direction of the glass substrate 110.

Then, as shown in FIG. 16B, it can be confirmed that the etching groove E is formed as the etchant gradually penetrates into the transformed portion of the glass substrate 110 on which the laser machining dot 125 is positioned. In this case, FIG. 16B shows a state after 10 minutes of wet-etching has elapsed. Here, it can be confirmed that a portion of a surface of the glass substrate 110 is removed by being etched although the etching rate is significantly slow for the transformed portion when the transformed portion inside the glass substrate 110 is etched by wet-etching to form the etching groove E.

Then, as shown in FIGS. 16C and 16D, it may be confirmed that while the etching groove gradually increases as the wet-etching proceeds further over time, the through-hole TH penetrating into the glass substrate 110 is formed.

In this case, FIGS. 16C and 16D show states after 80 minutes of wet-etching has elapsed. Here, it may be confirmed that since the size of the wet-etching radius required to form the through-hole TH is large, a lot of etching time are required.

On the other hand, as shown in FIG. 17A, in Example 1, it can be confirmed that the modulated Bessel beam was radiated to the glass substrate 210 in a scanning manner to form the laser machining dot 225 that changes the characteristics of the glass substrate 210 to be regularly spaced apart at regular intervals in the thickness direction of the glass substrate 210.

Then, as shown in FIG. 17B, it can be confirmed that the plurality of etching grooves E are formed as the etchant gradually penetrates into the transformed portion of the glass substrate 210 on which the laser scanning machining pattern 225 is positioned. In this case, FIG. 17B shows a state after 10 minutes of wet-etching time has elapsed. Here, it can be confirmed that a portion of a surface of the glass substrate 210 is removed by being etched although the etching rate is significantly slow for the transformed portion when the transformed portion inside the glass substrate 210 is etched by wet-etching to form the etching groove E.

Then, as shown in FIGS. 17C and 17D, as wet-etching proceeds further over time, the transformed dummy portion S inside the glass substrate 210 positioned between the plurality of etching grooves E is removed by being naturally separated to form the through-hole TH.

In this case, FIGS. 17C and 17D show states after 18 minutes of wet-etching time has elapsed. Here, it can be confirmed that the size of the wet-etching radius required to form the through-hole TH is significantly small, and thus it can be confirmed that the etching time is significantly reduced.

Although the embodiments of the present invention have been mainly described above, various changes or modifications may be made by those skilled in the art to which the present invention pertains. These changes and modifications may belong to the present invention unless they depart from the scope of the technical spirit provided by the present invention. Therefore, the scope of the present invention should be determined by the appended claims.

### [DESCRIPTION OF DRAWING SYMBOLS]

S210: infrared laser device aligning operation
S220: laser beam modulating operation
S230: laser scanning machining pattern forming operation
S240: through-hole forming operation through wet-etching

## Claims

1. A method of a precise through-hole at a high speed using an infrared laser, the method comprising:
an operation (a) of aligning an infrared laser device above a workpiece;
an operation (b) of modulating a laser beam emitted from the infrared laser device into a Bessel beam;
an operation (c) of performing laser machining that sequentially radiates the modulated Bessel beam to each through-hole forming area of the workpiece in a scanning manner to form a laser scanning machining pattern that locally changes the characteristics of the workpiece; and
an operation (d) of etching the workpiece on which the laser scanning machining pattern is formed to form a through-hole in each through-hole forming area.

2. The method of claim 1, wherein an ultrashort laser having a wavelength of 900 to 1,200 nm and a pulse width of 50 femtoseconds to 50 picoseconds is used as the laser beam.

3. The method of claim 1, wherein the laser scanning machining pattern is formed to have an arrangement structure in which a single dot formed by the laser machining is spaced apart at a regular interval or irregular interval to have a shape corresponding to the through-hole in a plan view.

4. The method of claim 3, wherein the laser scanning machining pattern has an arrangement structure having at least one shape selected from a polygon including a triangle, quadrangle, pentagon, hexagon, octagon, and star, a circle, and an ellipse, which are shapes corresponding to the through-hole, by separating the single dot formed by the laser machining at a regular interval or irregular interval of 20 µm or less in a plan view.

5. The method of claim 3, wherein the laser scanning machining pattern includes:
a first laser scanning machining pattern disposed to be spaced apart at regular interval or irregular intervals to have the shape corresponding to the through-hole in a plan view; and
at least one second laser scanning machining pattern disposed inside the first laser scanning machining pattern.

6. The method of claim 5, wherein the second laser scanning machining pattern has an arrangement structure of a shape that is the same as or differs from that of the first laser scanning machining pattern.

7. The method of claim 1, wherein the laser scanning machining pattern is formed to have a straight or curved arrangement structure in which a plurality of dots are connected to have a shape corresponding to the through-hole in a plan view.

8. The method of claim 1, wherein the workpiece is a flat glass substrate.

9. The method of claim 1, wherein in the operation (c), the laser machining in a scanning manner is performed in a scanning manner using a mirror structure to which at least one driving unit is coupled, and
the laser machining in the scanning manner is performed for a stabilization time of 10 ms or less.

10. The method of claim 1, wherein in the operation (d), each through-hole positioned in each through-hole forming area is formed coplanarly, or at least some are formed on different planes.

11. The method of claim 1, wherein in the operation (d), wet-etching using an etchant including at least one selected from a fluorinated-based etchant and a non-fluorinated-based etchant is used for the etching.

12. The method of claim 1, wherein the operation (d) includes:
an operation (d-1) of forming a plurality of etching grooves by allowing an etchant to penetrate into the laser scanning machining pattern of the workpiece of which characteristics has been locally changed by the laser machining and removing a portion of an exposed surface of the workpiece in a thickness direction; and
an operation (d-2) of forming a through-hole by allowing the etchant to penetrate into the laser scanning machining pattern along the plurality of etching grooves toward a central portion of the thickness of the workpiece and naturally separating or corroding a transformed dummy portion of the workpiece positioned in a space between the laser scanning machining patterns.

13. The method of claim 12, wherein an inner wall of the through-hole has a taper angle that is an acute angle and obtuse angle with respect to a horizontal surface of the workpiece.
